# EUROPÄISCHE PATENTANMELDUNG

(11) **EP 4 353 408 A1**
(43) Veröffentlichungstag der Anmeldung: **17.04.2024**
(21) Anmeldenummer: 22200640.5
(22) Anmeldetag: 10.10.2022
(51) Int. Cl.: B23Q 11/00, B23Q 11/06, B23D 45/16, B23D 59/00

(54) **STAUBHAUBE UND SYSTEM AUS WERKZEUGMASCHINE UND STAUBHAUBE**

(71) Anmelder: Hilti Aktiengesellschaft, 9494 Schaan (LI)
(72) Erfinder: Ohlendorf, Oliver, 86899 Landsberg (DE)
(74) Vertreter: Hilti Aktiengesellschaft Corporate Intellectual Property

(57) **Zusammenfassung**

Staubhaube (10) für eine Werkzeugmaschine (50), wobei die Werkzeugmaschine ein scheibenförmiges Werkzeug (52) aufweist, mit dem ein Werkstück oder ein Untergrund bearbeitbar ist. Eine Berührung des Werkzeugs mit dem Werkstück oder dem Untergrund erfolgt in einem Kontaktbereich (12), wobei die Staubhaube eine Schnittstelle (14) zum Anschluss einer Unterdruckquelle aufweist. In der Staubhaube wird ein Saugkanal (16) gebildet, der sich von der Schnittstelle bis zum Kontaktbereich erstreckt, wobei der Saugkanal entlang eines größeren Anteils seines Verlaufs fluidisch von dem scheibenförmigen Werkzeug getrennt verläuft, so dass ein wesentlicher Anteil einer Saugkraft der Unterdruckquelle im Kontaktbereich wirkt. In einem zweiten Aspekt betrifft die Offenbarung ein System (100) umfassend eine Werkzeugmaschine und eine solchen Staubhaube. Mit der Staubhaube kann eine verbesserte Absaugung von Staub gewährleistet werden.

## Beschreibung

Die vorliegende Erfindung betrifft eine Staubhaube für eine Werkzeugmaschine, wobei die Werkzeugmaschine ein scheibenförmiges Werkzeug aufweist, mit dem ein Werkstück oder ein Untergrund bearbeitbar ist. Eine Berührung des Werkzeugs mit dem Werkstück oder dem Untergrund erfolgt in einem Kontaktbereich, wobei die Staubhaube eine Schnittstelle zum Anschluss einer Unterdruckquelle aufweist. In der Staubhaube wird ein Saugkanal gebildet, der sich von der Schnittstelle bis zum Kontaktbereich erstreckt, wobei der Saugkanal entlang eines größeren Anteils seines Verlaufs fluidisch von dem scheibenförmigen Werkzeug getrennt verläuft, so dass ein wesentlicher Anteil einer Saugkraft der Unterdruckquelle im Kontaktbereich wirkt. In einem zweiten Aspekt betrifft die Erfindung ein System umfassend eine Werkzeugmaschine und eine solchen Staubhaube. Mit der Erfindung kann eine verbesserte Absaugung von Staub gewährleistet werden.

### Hintergrund der Erfindung:

Im Bereich der Werkzeugmaschinen bekannt, mit denen ein Werkstück oder ein Untergrund bearbeitet werden kann. Beispielsweise können mit Sägen Schnitte in ein Stück Holz oder eine Arbeitsplatte eingebracht werden. Andere Werkzeugmaschine können zur Bearbeitung von Stein, Mauerwerk oder Beton ausgebildet sein. Werkzeugmaschinen weisen üblicherweise ein Werkzeug auf, mit dem das Werkstück oder der Untergrund bearbeitet wird. Dabei kann es sich um Trennscheiben, Bohrer, Meißel oder dergleichen handeln. Die Werkzeuge der Werkzeugmaschinen können bohrerartig oder scheibenförmig ausgebildet sein und von den Werkzeugmaschinen angetrieben werden. Beispielsweise können die Werkzeuge eine axiale Bewegung im Sinne einer Vorwärts-Rückwärts-Bewegung ausführen oder sie können eine Drehbewegung ausführen.

Vor allem Werkzeugmaschinen mit scheibenförmigen Werkzeugen, wie Trenn- oder Schleifscheiben, weisen häufig einen Blattschutz und/oder eine Staubhaube auf. Mit dem Blattschutz soll der Nutzer der Werkzeugmaschine vor Verletzungen geschützt werden, mit der Staubhaube soll Staub aufgefangen werden, um zu verhindern, dass der Staub in die Atemwege des Nutzers der Werkzeugmaschine gelangt und dort gesundheitlichen Schaden anrichtet.

Staubhauben weisen in der Regel einen Absaugstutzen auf, über den die Staubhaube mit einem Sauggerät verbunden werden kann. Das Sauggerät kann dazu eingerichtet sein, einen Unterdruck und dadurch einen Saugstrom zu erzeugen, mit dem Staub, der bei der Arbeit mit der Werkzeugmaschine entsteht, abzusaugen. Dieser Saugstrom kann durch einen Saugschlauch strömen und den Staub aus dem Bereich der Staubhaube in den Staubsammelbehälter des Sauggeräts einsaugen.

Allerdings sind viele Gerätekombinationen aus Werkzeugmaschine und Staubhaube häufig sehr schwer, nehmen ein großes Volumen ein und sind dadurch sperrig und unkomfortabel in der Handhabung. Ein Anliegen der Erfindung besteht somit darin, eine Staubhaube und eine Gerätekombination aus einer Werkzeugmaschine und einer solchen Staubhaube anzugeben, die besonders komfortabel in der Handhabung ist und möglichst wenig sperrig ausgebildet ist.

Darüber hinaus besteht ein Anliegen der Erfindung darin, eine Staubhaube mit einer verbesserten Absaugleistung bzw. -wirkung anzugeben. Es besteht ein stetig wachsendes Interesse nach technischen Lösungen für eine quasi staubfreie Absaugung des bei der Arbeit mit einer Werkzeugmaschine entstehenden Staubs. Diese Entwicklung wird dadurch verstärkt, dass es in verschiedenen Ländern staatliche Regulierungsvorhaben und Arbeitsschutzregeln gibt, die in Richtung einer quasi staubfreien Arbeit mit staubproduzierenden Werkzeugmaschinen abzielen.

Die Aufgabe, die der vorliegenden Erfindung zugrunde liegt, besteht darin, die vorstehend beschriebenen Mängel und Nachteile des Standes der Technik zu überwinden und eine Staubhaube und eine Gerätekombination aus einer Werkzeugmaschine und einer solchen Staubhaube bereitzustellen, mit der die Absaugleistung verbessert und der Staub und Partikel, die bei der Arbeit mit der Werkzeugmaschine entstehen, möglichst effizient aus dem Bereich der Staubhaube und aus der Umgebung des Nutzers der Werkzeugmaschine zu entfernen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Staubhaube für eine Werkzeugmaschine vorgesehen, wobei die Werkzeugmaschine ein Werkzeug aufweist, mit dem ein Werkstück oder ein Untergrund bearbeitbar ist. Eine Berührung des Werkzeugs mit dem Werkstück oder dem Untergrund erfolgt in einem Kontaktbereich, wobei die Staubhaube eine Schnittstelle zum Anschluss einer Unterdruckquelle aufweist. Die Staubhaube ist dadurch gekennzeichnet, dass in der Staubhaube ein Saugkanal gebildet wird, der sich von der Schnittstelle bis zum Kontaktbereich erstreckt, wobei der Saugkanal entlang eines größeren Anteils seines Verlaufs fluidisch von dem scheibenförmigen Werkzeug getrennt verläuft, so dass ein wesentlicher Anteil einer Saugkraft der Unterdruckquelle im Kontaktbereich wirkt. Durch die Trennung des Saugkanals über eine weite Strecke seines Verlaufs von dem Innenraum der Staubhaube kann eine wesentliche Verbesserung der Absaugleistung der Unterdruckquelle in Verbindung mit der Staubhaube erreicht werden. Insbesondere kann das Innere der Staubhaube besonders frei gehalten werden, ebenso wie die Umgebung der Werkzeugmaschine, in der der Nutzer der Werkzeugmaschine arbeitet, sich bewegt und atmet. Auf diese Weise kann die Staubexposition, der der Nutzer bei der Arbeit mit der Werkzeugmaschine ausgesetzt ist, erheblich reduziert werden. Das Design der vorgeschlagenen Staubhaube ist das Ergebnis von aufwändigen Simulationen und Berechnungen, die zu der vorgeschlagenen Struktur mit einem Staubkanal, der im Sinne der Erfindung als "geschlossen" bezeichnet werden kann, geführt haben. Durch den vom Innenraum der Staubhaube abgetrennten Saugkanal kann der Saugstrom, der von der Unterdruckquelle kommt, derart geführt werden, dass der Saugstrom vorteilhafterweise in dem Bereich der Staubhaube seine Wirkung maximal entfaltet, an dem der Staub und etwaige Partikel entstehen. Mit anderen Worten kann mit der Erfindung eine Staubhaube bereitgestellt werden, bei der ein wesentlicher Anteil der Saugkraft der Unterdruckquelle im Kontaktbereich wirkt, wobei der Kontaktbereich im Kontext der vorliegenden Erfindung vorteilhafterweise mit dem Entstehungsort des Staubs zusammenfällt.

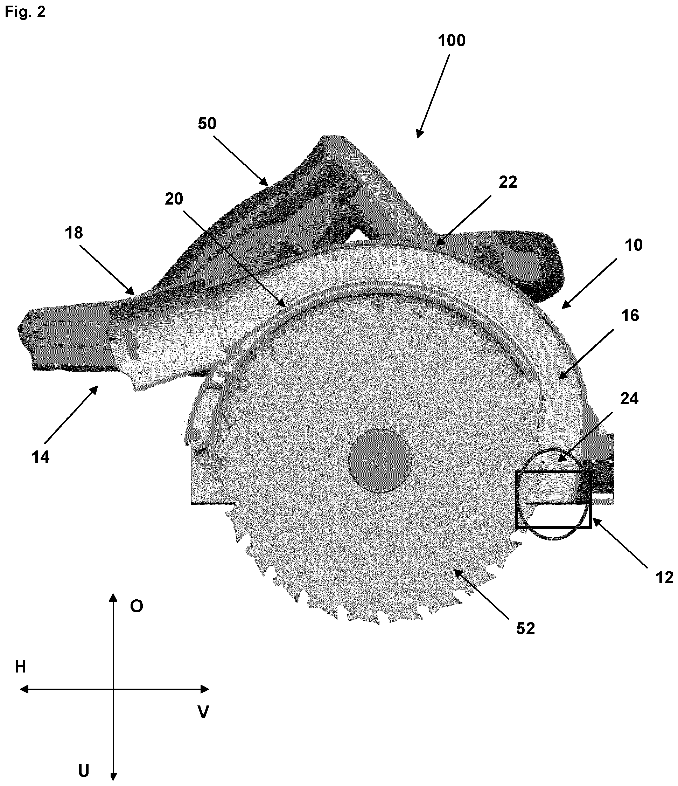

Insbesondere kann durch die Vorsehung eines abgetrennten Saugkanals eine unerwünschte Abschwächung des Saugstroms von der Unterdruckquelle zum Absaugort verhindert werden. Denn durch die Trennung des Saugkanals von dem volumenmäßig deutlich größeren Innenraum der Staubhaube verteilt sich der Saugstrom nicht gleich nach seiner Einmündung in dem gesamten Innenraum der Staubhaube, sondern der Saugstrom wird vielmehr in geordneter Weise dorthin geführt, wo der Staub entsteht, so dass an diesem Staub-Entstehungsort die eine besonders hohe Saugkraft vorhanden ist und der Staub mit besonders hoher Wirksamkeit aufgesaugt werden kann. Es ist im Sinne der Erfindung bevorzugt, dass die Staubhaube das Werkzeug der Werkzeugmaschine im Betriebszustand zumindest teilweise umgibt. Wenn die Werkzeugmaschine beispielsweise eine Kreissäge oder eine Tischkreissäge ist, kann es im Sinne der Erfindung bevorzugt sein, dass die obere Hälfte des Werkzeugs von der Staubhaube aufgenommen werden kann. Mit anderen Worten kann sich das Werkzeug der Werkzeugmaschine zumindest teilweise in dem Innenraum der Staubhaube drehen. Bei der in Fig. 2 dargestellten Kreissäge kann die Drehrichtung des bevorzugt scheibenförmigen Werkzeugs vorzugsweise «gegen den Uhrzeigersinn» verlaufen.

Ein Kontakt bzw. eine Berührung zwischen Werkstück und Untergrund auf der einen Seite und dem Werkzeug der Werkzeugmaschine auf der anderen Seite ergibt sich dann im vordersten Bereich der Staubhaube bzw. der Werkzeugmaschine, in dem das Werkzeug in das zu bearbeitende Werkstück oder in den zu bearbeitenden Untergrund eintaucht. An diesem Ort entsteht vorzugsweise der Staub, so dass dieser Ort im Sinne der Erfindung bevorzugt als Kontaktbereich bezeichnet wird. Es ist im Sinne der Erfindung ganz besonders bevorzugt, dass der Kontaktbereich mit dem Absaugraum der Staubhaube zusammenfällt.

Die Schnittstelle kann einen Stutzen zum Anschluss der Unterdruckquelle umfassen, wobei die Unterdruckquelle vorzugsweise von einem Staubsauger, einem Entstauber oder einem Sauggerät gebildet werden kann. In einer besonders bevorzugten Ausgestaltung der Erfindung kann die Unterdruckquelle von einem Industrie-Staubsauger gebildet werden. Der Staubsauger kann über einen Saugschlauch mit dem Stutzen der Schnittstelle der Staubhaube verbunden werden, so dass Unterdruck, der von dem Staubsauger als Unterdruckquelle erzeugt wird, durch den Saugschlauch an die Staubhaube übertragen werden kann. Die Formulierung «Übertragung eines Unterdrucks» bedeutet im Sinne der Erfindung bevorzugt, dass innerhalb des Staubsaugers ein Unterdruck zum Einsaugen von Partikeln, die bei der Arbeit mit der Werkzeugmaschine entstehen, erzeugt wird, wobei sich der Unterdruck bei Anschluss des Saugschlauchs in dem Saugschlauch und bei Anschluss der Staubhaube mittels der Schnittstelle in dem Saugkanal der Staubhaube ausbreiten kann. Bei Betrieb der Unterdruckquelle kann somit ein Unterdruck von dem Staubsauger bis ins Innere der Staubhaube bzw. ihres Saugkanals übertragen werden. Vorzugsweise wird der Unterdruck mittels eines Saugstroms übertragen, der von der Staubhaube in Richtung der Unterdruckquelle fliesst. Dieser Saugstrom ist vorzugsweise dazu eingerichtet, Staub und Partikel, die bei der Arbeit mit der Werkzeugmaschine entstehen, aufzunehmen und in Richtung der Unterdruckquelle bzw. ihres Staubsammelbehälters zu transportieren.

Die Formulierung, dass «der Saugkanal fluidisch von dem scheibenförmigen Werkzeug getrennt verläuft», bedeutet, dass es entlang des größeren Anteils des Verlaufs des Saugkanals keinen bzw. im Wesentlichen keinen Fluidaustausch zwischen dem Saugkanal und dem deutlich größeren Innenraum der Staubhaube, in dem sich vorzugsweise das scheibenförmige Werkzeug der Werkzeugmaschine dreht, gibt. Aufgrund dieser Abwesenheit eines Fluidaustauschs zwischen dem Saugkanal und dem Innenraum der Staubhaube kann der Saugkanal im Sinne der Erfindung bevorzugt auch als «geschlossener Staubkanal» bezeichnet werden. Wegen der fluidischen Trennung zwischen Saugkanal und Innenraum der Staubhaube kann sich der Unterdruck, der von der Unterdruckquelle erzeugt wird, im Wesentlichen unverändert zwischen der Unterdruckquelle und dem Saugkanal, sowie in dem Saugkanal ausbreiten. Eine Öffnung des Saugkanals ist lediglich in dem Kontaktbereich vorgesehen, in dem eine Berührung des Werkzeugs der Werkzeugmaschine mit dem Werkstück oder dem Untergrund, das/der bearbeitet werden soll, stattfindet. Im Bereich der Öffnung des Saugkanals in räumlicher Nähe zum Kontaktbereich kann dort der von der Unterdruckquelle erzeugte Unterdruck wirken und eine maximale Saugkraft entfalten, mit der die Partikel und der Staub, die bei der Arbeit der Werkzeugmaschine in dem Kontaktbereich entstehen, eingesaugt werden können. Der Staub und die Partikel können aus dem Kontaktbereich durch den Saugkanal abgesaugt werden, so dass der Staub und die Partikel durch den Saugschlauch in das Innere der Unterdruckquelle gelangen. Dort kann beispielsweise ein Staubsammelbehälter vorgesehen sein, in dem der Staub und die Partikel bis zur nächsten Entleerung des Staubsammelbehälters aufbewahrt bzw. gesammelt werden können. Auf diese Weise kann mit der Erfindung eine optimierte Absaugung von Staub und Partikeln ermöglicht werden.

Die Formulierung der «Entfaltung der Saugkraft» bedeutet im Sinne der Erfindung bevorzugt, dass der von der Unterdruckquelle kommende Unterdruck im Kontaktbereich zwischen dem Werkzeug der Werkzeugmaschine auf der einen Seite und dem Werkstück oder dem Untergrund auf der anderen Seite in dem Sinne wirken kann, dass es zu einer besonders starken Saugwirkung bzw. zum optimierten Einsaugen des Staubs und der Partikel, die bei der Arbeit mit der Werkzeugmaschine entstehen, kommt. Es hat sich gezeigt, dass die Übertragung des Unterdrucks entlang eines geschlossenen Saugkanals bis an den Absaugort zu einer besonders großen Saugkraft und dadurch zu einer überraschend wirksamen und effizienten Absaugung von Staub und Partikeln führt. Die Führung des Saugstroms in dem geschlossenen Saugkanal, der von dem Innenraum der Staubhaube getrennt vorliegt, führt somit zu einer Zentrierung der Saugkraft an dem Ort, wo sie gebraucht wird, nämlich am Entstehungsort des Staubs, der im Kontext der Erfindung vorteilhafterweise mit dem Kontaktbereich der Staubhaube zusammenfällt. Es ist im Sinne der Erfindung bevorzugt, dass der Kontaktbereich zwischen dem Werkzeug der Werkzeugmaschine auf der einen Seite und dem Werkstück oder dem Untergrund auf der anderen Seite vorzugsweise auch als Kontaktbereich der Staubhaube bezeichnet wird, obwohl es sich dabei nicht um eine physische Komponente der Staubhaube handelt.

Es hat sich gezeigt, dass durch die Anordnung des Stutzens in einem hinteren, oberen Bereich der Staubhaube eine ergonomisch besonders gut in der Hand liegende Staubhaube bereitgestellt werden kann, die vorteilhafterweise in Kombination mit einer Werkzeugmaschine besonders kompakt ausgebildet ist und eine komfortable Handhabung gewährleistet. Die Begriffe «hinten», «oben», «unten», «oben» stellen für den Fachmann keine unklaren Begriffe dar, denn die Begriffe werden in den Figuren erläutert. So kann die Raumrichtung «nach vorne» durch eine schiebende Arbeitsrichtung einer Säge gekennzeichnet sein, während die Raumrichtung «nach hinten» durch eine ziehende Arbeitsrichtung der Säge gekennzeichnet ist. Der untere Teil bzw. die untere Hälfte des vorzugsweise scheibenförmigen Werkzeugs kann beispielsweise unter einem Arbeitstisch oder unter Arbeitsplatte der Werkzeugmaschine hervorschauen, während eine Staubhaube üblicherweise auf der Oberseite eines Werkzeugs der Werkzeugmaschine angeordnet ist, insbesondere dann, wenn es sich - wie in dem in Fig. 2 dargestellten Beispiel der Erfindung bei der Werkzeugmaschine um eine Kreissäge handelt.

Durch die Vorsehung eines geschlossenen Saugkanals, der sich vorzugsweise zwischen der Anschlussstelle der Unterdruckquelle und dem Absaugort erstreckt, wendet sich die Erfindung von dem Stand der Technik ab, bei dem die Staubabsaugung im gesamten Innenraum der Staubhaube erfolgt. Die Fachwelt war bisher davon ausgegangen, dass eine möglichst großflächige bzw. großvolumige Anwendung des Unterdrucks innerhalb eines möglichst großen Volumens innerhalb der Staubhaube zu besonders guten Absaugergebnissen führt. Mit der vorliegenden Erfindung wird aber gerade der entgegengesetzte Weg eingeschlagen, indem der Saugkanal und der darin verlaufende Saugstrom über den größeren Anteil des Verlaufs des Saugkanals von dem Innenraum der Staubhaube getrennt werden. Dadurch kann vorteilhafterweise erreicht werden, dass ein besonders großer Anteil der Saugkraft, die von dem Unterdruck der Unterdruckquelle bewirkt wird, im Kontaktbereich der Staubhaube zur Wirkung kommt, so dass eine starke Sogwirkung in den Saugkanal hinein in Richtung der Unterdruckquelle erzeugt wird. Die Sogwirkung, die von dem Unterdruck der Unterdruckquelle erzeugt wird, sorgt vorteilhafterweise dafür, dass Staub und Partikel, die bei der Arbeit mit der Werkzeugmaschine erzeugt werden, zielgerichtet, effizient und im Wesentlichen verlustfrei in Richtung der Unterdruckquelle abgesaugt werden, wobei aufgrund der Erfindung eine besonders starke Saugkraft auf den Staub und die Partikel wirkt. Auf diese Weise kann eine besonders effektive Absaugung im Kontaktbereich der Staubhaube ermöglicht werden, die sowohl den Innenraum der Staubhaube von Staub freihält, als auch die Umgebung der Werkzeugmaschine, in der sich vorzugsweise bei Betrieb der Werkzeugmaschine der Nutzer der Werkzeugmaschine aufhält. Durch die starke Absaugwirkung der vorgeschlagenen Staubhaube in Verbindung mit einer herkömmlichen Unterdruckquelle kann eine besonders staubarme bzw. staubfreie Umgebung der Werkzeugmaschine geschaffen werden, in der sich der Nutzer der Werkzeugmaschine bei deren Bedienung aufhält. Auf diese Weise kann die Staubexposition des Nutzers der Werkzeugmaschine mit Hilfe der vorgeschlagenen Staubhaube mit dem geschlossenen Saugkanal wesentlich reduziert werden. Dies kann einerseits eine lange Arbeitszeit des Nutzers mit der Werkzeugmaschine ermöglichen, denn der Nutzer muss beispielsweise nicht aufgrund der Überschreitung von Staub-Grenzwerten die Arbeit mit der Werkzeugmaschine einstellen. Andererseits kann bei gleichbleibend langer Arbeitszeit mit der Werkzeugmaschine die Staubexposition, der der Nutzer der Werkzeugmaschine ausgesetzt ist, erheblich verringert werden.

Es ist im Sinne der Erfindung bevorzugt, dass der Saugkanal oberhalb des scheibenförmigen Werkzeugs verläuft. Durch die Führung des Saugkanals entlang, vorzugsweise oberhalb, des scheibenförmigen Werkzeugs der Werkzeugmaschine kann ein strömungsdynamisch optimierter Saugstrom erzeugt werden, der seine volle Wirkung vorteilhafterweise im Bereich des Absaugraums bzw. am Entstehungsort des Staubs entfalten kann. Bei herkömmlichen Staubhauben, bei denen der Saugstrom häufig direkt in den Innenraum der Staubhaube einmündet, kann der Saugstrom - wie Simulationen gezeigt haben - abreißen, so dass ein großer Teil der Saugleistung nicht dorthin gelangt, wo der Staub bei der Arbeit mit der Werkzeugmaschine entsteht. Insofern wendet sich die Erfindung gerade von solchen Staubhauben mit «unterbrochenem Saugkanal» ab, indem der Saugstrom entlang des Werkzeugs der Werkzeugmaschine in einem im Wesentlichen geschlossenen Saugkanal bis zum Entstehungsort des Staubs geführt wird.

Es ist im Sinne der Erfindung bevorzugt, dass der Saugkanal eine Unterseite und eine Oberseite aufweist, wobei die Unterseite und die Oberseite des Saugkanals im Wesentlichen parallel zueinander verlaufen und sich die Unterseite einem Verlauf eines Umfangs des Werkzeugs der Werkzeugmaschine anpasst. Die Unterseite des Saugkanals ist vorzugsweise dazu eingerichtet, den Saugkanal fluidisch von dem Innenraum der Staubhaube zu trennen, so dass eine Verbindung vorzugsweise insbesondere im Kontaktbereich der Staubhaube vorliegt. Dieses Design des Saugkanals wird im Sinne der Erfindung bevorzugt als «im Wesentlichen geschlossener Saugkanal» bezeichnet. Es ist im Sinne der Erfindung bevorzugt, dass die Unterseite des Saugkanals im Kontaktbereich endet, so dass dort ein Absaugraum zum Absaugen von Staub und Partikeln geschaffen wird. Vorzugsweise kann die Unterseite des Saugkanals im Kontaktbereich enden, so dass dort eine Öffnung des Saugkanals zum Einsaugen von Staub und Partikel und ein Raum zur Entfaltung der Saugkraft der Unterdruckquelle geschaffen wird. Es ist im Sinne der Erfindung bevorzugt, dass die Unterseite des Saugkanals im Kontaktbereich endet, so dass die Unterseite dort nicht mehr vorliegt, sondern eine Öffnung des Saugkanals zum Einsaugen von Staub und Partikel und einen Raum zur Entfaltung der Saugkraft der Unterdruckquelle schafft. Aufgrund der am Ende des Saugkanals, d.h. im Bereich seiner Öffnung zum Absaugraum hin, wirkenden besonders starken Saugkraft auf Staub und Partikel gelangen vorteilhafterweise annähernd keine Partikel in den Innenraum der Staubhaube, so dass die Rotation des Werkzeugs der Werkzeugmaschine nicht oder in nur sehr geringem Maße beeinträchtigt wird. Die Erfindung, insbesondere das Design des Saugkanals und die dadurch ermöglichte Führung des Saugstroms ermöglicht es vorteilhafterweise, dass der Innenraum der Staubhaube besonders frei von Staub und Partikeln gehalten werden kann, so dass sich das scheibenförmige Werkzeug der Werkzeugmaschine im Wesentlichen ungestört drehen kann. Es ist im Sinne der Erfindung bevorzugt, dass die Unterseite des Saugkanals den Saugkanal in einer Raumrichtung «nach unten», d.h. in Richtung des Innenraums der Staubhaube abgrenzt, während die Oberseite des Saugkanals den Saugkanal gegenüber einer Umgebung der Werkzeugmaschine in einer Raumrichtung «nach oben» abgrenzt.

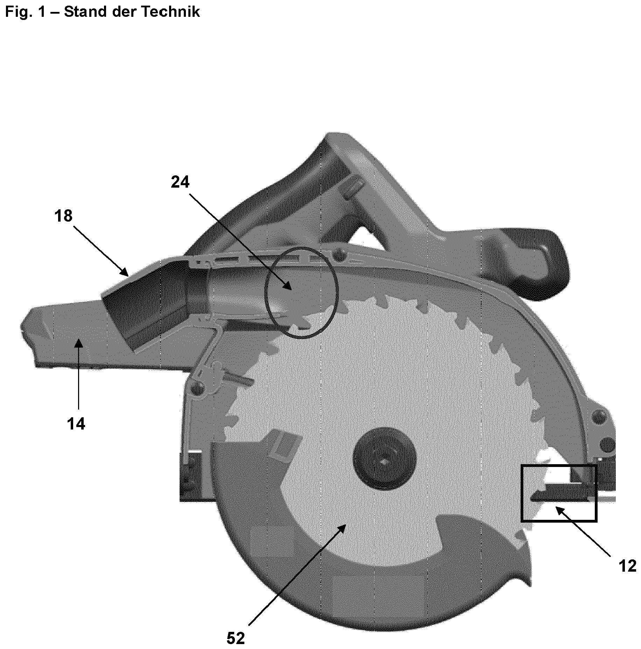

Es ist im Sinne der Erfindung ganz besonders bevorzugt, dass der Absaugraum mit dem Kontaktbereich im Wesentlichen zusammenfällt. Das bedeutet im Sinne der Erfindung bevorzugt, dass bei der vorgeschlagenen Staubhaube die Absaugung von Staub und Partikeln im Wesentlichen dort erfolgt, wo der Staub und die Partikel entstehen, nämlich im Kontaktbereich der Staubhaube bzw. dort, wo das Werkzeug der Werkzeugmaschine in Kontakt gelangt mit einem zu bearbeitenden Werkstück oder einem zu bearbeitenden Untergrund. Dadurch, dass die Absaugung von Staub und Partikeln im Wesentlichen am Entstehungsort derselben erfolgt, grenzt sich die Erfindung von Staubhauben aus dem Stand der Technik ab, bei denen die Absaugung im Einmündungsbereich des Absaugstutzens erfolgt. Dieser Einmündungsbereich ist bei der konventionellen Staubhaube, wie sie aus dem Stand der Technik bekannt ist und in Figur 1 gezeigt wird, oben links im Bild, während der Absaugraum bei der Staubhaube gemäß der vorliegenden Erfindung, die in Figur 2 gezeigt wird, unten rechts im Bild zu sehen ist. Die jeweiligen Absaugräume werden in den Figuren durch elliptische Umrisse dargestellt, während die Kontaktbereiche, in denen Staub und Partikel bei der Arbeit mit der Werkzeugmaschine entstehen, in den Figuren mit rechteckigen Kästchen symbolisiert werden. Deutlich zu sehen ist, dass in Figur 2, die eine bevorzugte Ausgestaltung der erfindungsgemäßen Staubhaube zeigt, der Absaugraum im Wesentlichen mit dem Kontaktbereich der Staubhaube zusammenfällt, während in Fig. 1, die eine Staubhaube aus dem Stand der Technik zeigt, der Absaugraum und der Entstehungsraum des Staubs deutlich auseinanderfallen. Das Auseinanderfallen von Absaugraum und Staub-Entstehungsraum kommt vorzugsweise dadurch zustande, dass die vorgeschlagene Staubhaube einen Saugkanal aufweist, der sich Einmündungsbereich des Saugschlauchs bis zum Kontaktbereich bzw. Staub-Entstehungsraum erstreckt, wobei der Saugkanal entlang eines größeren Anteils seines Verlaufs fluidisch von dem scheibenförmigen Werkzeug getrennt verläuft, so dass ein wesentlicher Anteil einer Saugkraft der Unterdruckquelle im Kontaktbereich wirkt. Dadurch ist die Erfindung mit dem besonderen Vorteil verbunden, dass Staub und Partikel insbesondere dort abgesaugt werden bzw. auf eine besonders große Saugkraft treffen, wo sie entstehen. Auf diese Weise können Staub und Partikel mit Hilfe der Erfindung besonders effizient aus dem Kontaktbereich bzw. Staub-Entstehungsraum abgesaugt und damit entfernt werden, ohne eine Gefahr für den Nutzer der Werkzeugmaschine darzustellen und ohne diesen gesundheitlich zu belasten. Es ist im Sinne der Erfindung bevorzugt, dass der Saugkanal so durch die Staubhaube geführt wird, dass der Absaugraum im Wesentlichen mit dem Kontaktbereich der Staubhaube zusammenfällt.

In einem zweiten Aspekt betrifft die Erfindung ein System umfassend eine Werkzeugmaschine und eine Staubhaube. Die für die Staubhaube eingeführten Begriffe, Definitionen und technischen Vorteile gelten vorzugsweise für das System analog. Die Werkzeugmaschine des Systems kann beispielsweise eine Kreissäge, ein Trennschleifer, eine Mauernutfräse, ein Schlitzgerät oder eine beliebige Werkzeugmaschine mit scheibenförmigem Werkzeug sein, ohne darauf beschränkt zu sein.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer herkömmlichen Staubhaube, wie sie aus dem Stand der Technik bekannt ist
- Fig. 2: Ansicht einer bevorzugten Ausgestaltung der vorgeschlagenen Staubhaube

### Ausführungsbeispiele und Figurenbeschreibung:

Figur 1 zeigt eine Staubhaube, wie sie aus dem Stand der Technik bekannt ist. Die Staubhaube kann über eine Schnittstelle 14 mit einer Unterdruckquelle (nicht dargestellt) verbunden werden, wobei die Schnittstelle 14 zur Verbindung mit der Unterdruckquellen einen Anschluss-Stutzen 18 umfassen kann. Die Unterdruckquelle kann von einem herkömmlichen Industrie- oder Baustellenstaubsauger gebildet werden. In Figur 1 sind insbesondere der Absaugraum 24 und der Kontaktbereich 12 eingezeichnet, die bei der herkömmlichen Staubhaube aus dem Stand der Technik in der Regel nicht zusammenfallen. Der Kontaktbereich 12 ist der Bereich eines Systems aus Werkzeugmaschine und Staubhaube, in dem das scheibenförmige Werkzeug der Werkzeugmaschine mit einem zu bearbeitenden Werkzeug oder einem zu bearbeitenden Untergrund in Kontakt gelangt. Der Absaugraum 24 ist derjenige Bereich innerhalb des Systems aus Werkzeugmaschine und Staubhaube, in dem die Absaugung, d.h. die Saugleistung oder die Saugkraft am größten ist. Bei herkömmlichen Staubhauben ist dies regelmäßig im Bereich der Einmündung des Anschluss-Stutzens 18 in den Innenraum der Staubhaube. Von dort «verteilt» sich der Saugstrom bzw. die Saugkraft im Innenraum der Staubhaube, wodurch ein großer Teil der Saugkraft des von der Unterdruckquelle kommenden Saugstroms verloren geht.

Figur 2 zeigt eine bevorzugte Ausgestaltung der vorgeschlagenen Staubhaube 10 mit einem im Wesentlichen geschlossenen Saugkanal 16, der vorzugsweise um das scheibenförmige Werkzeug 52 der Werkzeugmaschine 50 herumgeführt werden kann. Vorzugsweise kann der Saugkanal 16 entlang einer Oberseite des scheibenförmigen Werkzeugs 52 der Werkzeugmaschine 50 herumgeführt werden, so dass es vorzugsweise oberhalb des scheibenförmigen Werkzeugs 52 der Werkzeugmaschine 50 verläuft. Durch die Vorsehung des Saugkanals 16 wird vermieden, dass sich der Saugstrom in dem Innenraum der Staubhaube 10 verteilt und dadurch seine Saugkraft verloren geht. Die Staubhaube 10 weist eine Schnittstelle 14 auf, über die die Staubhaube 10 mit einer Unterdruckquelle (nicht dargestellt) verbunden werden kann. Im Bereich der Schnittstelle 14 kann ein Anschluss-Stutzen 18 vorgesehen sein, um die Staubhaube 10 mit einem Saugschlauch (nicht dargestellt) der Unterdruckquelle zu verbinden. Mit Hilfe der Unterdruckquelle können der Saugschlauch und der Saugkanal 16 der Staubhaube 10 mit einem Unterdruck beaufschlagt werden, so dass ein Saugstrom gebildet wird, mit dem Staub und Partikel aus dem Kontaktbereich 12 der Staubhaube 10 abgesaugt werden können. Der Kontaktbereich 12 entspricht vorzusweise dem Bereich eines Systems 100 aus Werkzeugmaschine 50 und Staubhaube 10, in dem das scheibenförmige Werkzeug 52 der Werkzeugmaschine 50 mit einem zu bearbeitenden Werkzeug oder einem zu bearbeitenden Untergrund (jeweils: nicht dargestellt) in Kontakt gelangt. Vorzugsweise stellt der Kontaktbereich 12 den Entstehungsort des Staubs und der Partikel dar. Mit anderen Worten können bei der Arbeit mit der Werkzeugmaschine 50 Staub und Partikel erzeugt werden, wobei dies vorzugsweise in dem Kontaktbereich 12 der Staubhaube 10 erfolgt.

Der Saugkanal 16 kann vorzugsweise von bevorzugt im Wesentlichen parallel zueinander verlaufenden Unterseiten 20 und Oberseiten 22 gebildet werden, wobei die Unterseite 20 des Saugkanals 16 einen unteren Abschluss des Saugkanals 16 bildet und die Oberseite 22 des Saugkanals 16 den Saugkanal 16 gegenüber einer Umgebung der Staubhaube 10 begrenzt. Die Unterseite 20 des Saugkanals 16 bildet insbesondere eine Abgrenzung des Saugkanals 16 in Richtung des Innenraums der Staubhaube 10. Dadurch kann ein im Wesentlichen geschlossener Saugkanal 16 gebildet werden, mit dem der von der Unterdruckquelle kommenden Saugstrom vorteilhafterweise in den Kontaktbereich 12 der Staubhaube 10 geleitet werden kann. Der Saugkanal 16 öffnet sich im Kontaktbereich 12 der Staubhaube 10, indem die Unterseite 20 des Saugkanals 16 dort endet. Auf diese Weise kann dort, in dem Kontaktbereich 12 der Staubhaube 10, der Saugstrom seine volle Saugleistung entfalten und den Staub und die Partikel direkt an ihrem Entstehungsort absaugen.

Der Ort, an dem der Saugstrom seine volle Saugleistung entfaltet, wird im Sinne der Erfindung als «Absaugraum 24» bezeichnet. Im Kontext der vorliegenden Erfindung ist es vorgesehen, dass der Kontaktbereich 12 und der Absaugraum 24 der Staubhaube 10 zusammenfallen bzw. im Wesentlichen zusammenfallen. Somit liegt der Erfindung der Grundgedanke zugrunde, einen im Wesentlichen geschlossenen Saugkanal 16 in einer Staubhaube 10 bereitzustellen, mit dem ein von einer Unterdruckquelle kommender Saugstrom so um das scheibenförmige Werkzeug 52 einer Werkzeugmaschine 50 herumgeführt werden kann, dass die volle Saugleistung des Saugstroms im Kontaktbereich 12 der Staubhaube 10 zum Tragen kommt, also dort, wo bei der Arbeit mit der Werkzeugmaschine 50 der Staub entsteht. Damit unterscheidet sich die vorgeschlagene Staubhaube 10 vorn herkömmlichen Staubhauben, wie sie aus dem Stand der Technik bekannt sind (vgl. Figur 1), in dem ein im Wesentlichen geschlossener Saugkanal 16 bereitgestellt wird, mit dem ein Saugstrom an einen gewünschten Ort, hier insbesondere an den Entstehungsort des Staubs, geleitet werden kann.

Die Staubhaube 10 kann mit der Werkzeugmaschine 50 ein System 100 bilden, welches durch eine durch die Vorsehung eines im Wesentlichen geschlossenen Saugkanals 16 eine verbesserte Staubabsaugung gewährleisten kann.

Es ist im Sinne der Erfindung bevorzugt, dass der Kontaktbereich 12 in einem vorderen Bereich der Staubhaube 10 angeordnet vorliegt, wobei die Raumrichtung «nach vome» mit dem Bezugszeichen «V» bezeichnet wird. Der Anschluss-Stutzen 18 kann in einem hinteren Bereich der Staubhaube 10 angeordnet vorliegen, wobei die Raumrichtung «nach hinten» mit dem Bezugszeichen «H» bezeichnet wird. Ein Teil des scheibenförmigen Werkzeugs 52 der Werkzeugmaschine 50 dreht sich unterhalb eines Arbeitstischs (nicht dargestellt) der Werkzeugmaschine 50, wobei die Raumrichtung «nach unten» mit dem Bezugszeichen «U» bezeichnet wird. Der Saugkanal 16 wird vorzugsweise oberhalb des scheibenförmigen Werkzeugs 52 der Werkzeugmaschine 50 geführt, wobei die Raumrichtung «nach oben» mit dem Bezugszeichen «O» bezeichnet wird.

### Bezugszeichenliste

- 10: Staubhaube
- 12: Kontaktbereich
- 14: Schnittstelle
- 16: Saugkanal
- 18: Anschluss-Stutzen
- 20: Unterseite des Saugkanals
- 22: Oberseite des Saugkanals
- 24: Absaugraum
- 50: Werkzeugmaschine
- 52: scheibenförmiges Werkzeug der Werkzeugmaschine
- 100: System

## Patentansprüche

1. Staubhaube (10) für eine Werkzeugmaschine (50), wobei die Werkzeugmaschine (50) ein scheibenförmiges Werkzeug (52) aufweist, mit dem ein Werkstück oder ein Untergrund bearbeitbar ist, wobei eine Berührung des Werkzeugs (52) mit dem Werkstück oder dem Untergrund in einem Kontaktbereich (12) erfolgt und wobei die Staubhaube (10) eine Schnittstelle (14) zum Anschluss einer Unterdruckquelle aufweist,
**dadurch gekennzeichnet, dass**
in der Staubhaube (10) ein Saugkanal (16) gebildet wird, der sich von der Schnittstelle (14) bis zum Kontaktbereich (12) erstreckt, wobei der Saugkanal (16) entlang eines größeren Anteils seines Verlaufs fluidisch von dem scheibenförmigen Werkzeug (52) getrennt verläuft, so dass ein wesentlicher Anteil einer Saugkraft der Unterdruckquelle im Kontaktbereich (12) wirkt.

2. Staubhaube (10) nach Anspruch 1
**dadurch gekennzeichnet, dass**
die Schnittstelle (14) einen Stutzen (18) zum Anschluss der Unterdruckquelle umfasst.

3. Staubhaube (10) nach Anspruch 1 oder 2
**dadurch gekennzeichnet, dass**
der Saugkanal (16) oberhalb des scheibenförmigen Werkzeugs (52) verläuft.

4. Staubhaube (10) nach einem der vorhergehenden Ansprüche
**dadurch gekennzeichnet, dass**
der Saugkanal (16) eine Unterseite (20) und eine Oberseite (22) aufweist, wobei die Unterseite (20) und die Oberseite (22) des Saugkanals (16) im Wesentlichen parallel zueinander verlaufen und sich die Unterseite einem Verlauf eines Umfangs des Werkzeugs der Werkzeugmaschine anpasst.

5. Staubhaube (10) nach Anspruch 4
**dadurch gekennzeichnet, dass**
sich die Unterseite (20) des Saugkanals (16) einem Verlauf eines Umfangs des scheibenförmigen Werkzeugs (52) der Werkzeugmaschine (50) anpasst.

6. Staubhaube (10) nach Anspruch 4 oder 5
**dadurch gekennzeichnet, dass**
die Unterseite (20) des Saugkanals (16) im Kontaktbereich (12) endet, so dass dort ein Absaugraum (24) zum Absaugen von Staub und Partikeln geschaffen wird.

7. Staubhaube (10) nach Anspruch 6
**dadurch gekennzeichnet, dass**
die Oberseite (22) des Saugkanals (16) den Absaugraum (24) gegenüber einer Umgebung der Werkzeugmaschine (50) abgrenzt.

8. Staubhaube (10) nach Anspruch 6 oder 7
**dadurch gekennzeichnet, dass**
der Absaugraum (24) mit dem Kontaktbereich (12) im Wesentlichen zusammenfällt.

9. System (100) umfassend eine Werkzeugmaschine (50) und eine Staubhaube (10) nach einem der vorhergehenden Ansprüche
**dadurch gekennzeichnet, dass**
die Werkzeugmaschine (50) eine Kreissäge, ein Trennschleifer, eine Mauernutfräse und/oder ein Schlitzgerät ist.
